(19) Europäisches Patentamt

European Patent Office

Office européen des brevets

(11) **EP 1 186 699 B1**

(12) **EUROPEAN PATENT SPECIFICATION**

(45) Date of publication and mention
of the grant of the patent:
**14.06.2006 Bulletin 2006/24**

(51) Int Cl.:
***D07B 1/06*** (2006.01)

(21) Application number: **01121613.2**

(22) Date of filing: **11.09.2001**

(54) **Steel cord for tire and radial tire**

Stahlseil für Luftreifen sowie radialer Luftreifen

Câble d'acier pour pneumatique et pneumatique radial

(84) Designated Contracting States:
**DE FR IT**

(30) Priority: **11.09.2000 JP 2000275108**
**11.09.2000 JP 2000275114**

(43) Date of publication of application:
**13.03.2002 Bulletin 2002/11**

(60) Divisional application:
**05016172.8 / 1 602 780**

(73) Proprietor: **THE YOKOHAMA RUBBER CO., LTD.**
**Tokyo, 105 (JP)**

(72) Inventors:
• **Hirachi, Minoru,**
**The Yokohama Rubber Co.,Ltd Ltd.**
**Watarai-gun, Mie-ken (JP)**
• **Imamiya, Susumu,**
**The Yokohama Rubber Co., Ltd.**
**Hiratsuka-shi,**
**Kanagawa-ken (JP)**

(74) Representative: **HOFFMANN EITLE**
**Patent- und Rechtsanwälte**
**Arabellastrasse 4**
**81925 München (DE)**

(56) References cited:
EP-A- 1 033 435          DE-A- 2 648 524
US-A- 5 279 695          US-A- 6 007 912

**Description**

The present invention relates to a steel cord for a tire and a radial tire using the steel cord, in particular relates to a steel cord for a tire and a radial tire with improvements to increase a corrosion resistance and durability of a completed tire product and improve the energy efficiency during curing.

For a carcass layer (carcass member), a bead reinforcing layer (finishing member) and a part of a belt layer (belt member) of a radial tire for a heavy load, a steel cord having an m+n twist structure comprising a core containing m pieces of wires and a sheath containing n pieces of wires, or a steel cord winding a wrapping wire around the former, and the like are used. To these members, an extreme bending deformation is given when the tire runs. Because of this, the wire of the steel cord is between 0.15 mm and 0.22 mm in diameter, which is smaller than an ordinary cord for a belt, and in order to minimize a strain caused on the surface of each wire by bending and make the strain uniform, as possible, generally a cord composition having a cross-sectional shape with wires arranged densely and coaxially is selected.

In the case of steel cords with these compositions, of which a gap between wires is small at an outermost sheath part due to the cross-sectional shape, a sheathing rubber cannot fill a space between core and sheath in a rubber sheathing process and a curing process, and the space remains as a cavity in a completed tire. Moreover, the cavity works as a passage of air, air containing moisture, or moisture.

Moisture diffused and penetrated from inside the tire or from a tire surface, or moisture penetrated from a cut part in an outer layer of the tire freely moves in a carcass cord arranged in a radial direction of the tire, degrades an adhesion between cord and rubber, and in an extreme case corrodes and deteriorates the cord itself. Accordingly, a separation of adhesion between cord and rubber or a rupture of cord occurs from a part where strain is the largest in a carcass periphery to form a cause of a serious tire trouble.

Further, gas is generated from a rubber compound during curing, when a cavity between core and sheath works as a passage of the gas, and the gas bursts out to a carcass end where curing is relatively slow and forms a large void in this part. This void disappears as curing proceeds, but in order to completely extinguish the void, an unnecessarily large pressure needs to be applied during curing and greatly increase an energy cost. This way, in the prior art wastes such as an energy loss, a decrease in productivity and an extra facility arise to simply extinguish the void. To remove these wastes, removal of air from hollow parts in the step of twisted wire before rolling the steel cord to a tire component member is effective.

As means for removing air from the hollow part of the steel cord, it is considered to insert a core material, such as a vulcanized rubber string or an organic fiber into a core of a cord. However, since a interface strength of the core material and a matrix rubber covering the twisted wire is lowered in this method, under repeated strains, separation thereof may occur at an interface part to form cracks near the cord and lead to a product defect. A method to fill the hollow part by dissolving the matrix rubber in an organic solvent and dipping the cord in it can also be considered, but in the light of the recent environmental issue, use of a solvent in production process is not desirable. Besides, this method takes a long time for drying by vaporizing the solvent after dipping and greatly lowers the productivity. Further, a method to ease the insertion of rubber into the hollow part by reducing a number of wires of the steel cord compared with usual to form a twisted wire structure having an asymmetrical cross section, which lowers a bending resistance of the produced tire, is not favorable depending on a position where the steel cord is used.

On the other hand, a belt part of a radial tire for an automobile or of a radial tire for heavy load is close to a tread and prone to a failure during running due to a piercing object like a nail, tends to allow invasion of moisture from the outside through this part, corrodes the steel cord, and cause separation due to a decrease in adhesion with the rubber by rupture of the cord and the moisture. Further, a side reinforcing part is relatively free of damage compared with the belt part, but when a cut reaching the cord occurred due to a vehicle running on a curb, the same cord rupture and separation as above may occur.

In order to make up for such shortcomings, studies were made about the steel cord structure and generally a structure for preventing hollow parts in steel cord is applied to. That is, a structure such that a matrix rubber that surrounds the hollow part of steel cord enters and fill the hollow part is adopted.

As steel cords meeting this object, conventionally two types are adopted. One which is called the open cord structure aims to secure gaps of steel wires by intentionally twisting them loosely and leave no hollow part in steel cord of a produced tire by filling a low-viscosity, unvulcanized rubber into the hollow part of the cord. For example, an open structure with a 1x5 twist structure is typically mentioned. Another one is a structure that easily allows rubber to penetrate into all gaps between wires by making a cord structure with an outer wire wound spirally around a core formed with a few (1 or 2) steel wires, as represented by a 2+2 twist structure.

However, while said steel cords have great effects in penetrating rubber, they each have the following defects:

The open cord loosens the twist so as to form gaps between wires, but because of this, the steel cord of produced tire easily expands when a tensile stress is applied to, compared to the steel cord with tightly twisted wires. In particular, in case of running with a heavy load or at a high speed, a large stress is applied to wires and the cord tends to deform. By this, an outer periphery of tire grows larger than a status under a stop condition, and the deformation promotes separation between belt layers and lowers the durability of tire.

Further, the open cord fills the hollow part of cord by the low-viscosity rubber that flows during curing, but the rubber does not fill the hollow part sufficiently during rolling and forming to a tire component member, leaving this part as a large cavity. The cavity is larger compared to the tightly twisted cord. Thus, air existing in said cavity is driven out by the rubber entering during curing, but a deadlocked air is sent to a part where the progress of curing is slow and forms a large void there. The void disappears by a vulcanizing pressure, but to completely extinguish the void, a more than necessary large pressure needs to be given during curing, lowering the energy efficiency.

On the other hand, for the rubber penetration structure as represented by the 2+2 twist structure, the cross-sectional structure becomes irregular so as to secure a passage for the rubber to penetrate. Originally, steel wires composing the cord desirably be arranged clearly coaxially, and by this a strain that occurs in wire surfaces when the tire is subjected to a deformation during running can be made most uniform. Whereas, since a steel cord having an irregular cross-sectional structure generates a large surface strain in certain wires, a rupture tends to occur in the cord when the tire is under a large burden. Further, in case of a steel cord like this, since the rubber does not penetrate thoroughly into wire gaps in the phase of rolling or forming into a tire component member, forming a void during curing, though not so much as the case of open cord, the energy efficiency of curing is not good.

That is, a steel cord for a tire is ideal as steel cord for used with a belt member and a side reinforcing member when hollow parts of the cord are already filled with rubber in the phase of rolling or forming into a tire component member, the cord has a clear, coaxial cross-sectional structure, and wire gaps are small and do not cause big deformations during running.

To obtain such a cord, a method to fill hollow parts by dissolving a rubber of a type with a matrix rubber in an organic solvent, dipping a cord in it, filling the inside with a liquefied dissolving rubber by untwisting the cord a little, and filling the hollow parts by vaporizing the remaining solvent is also proposed, but in the light of the recent environmental issue, use of a solvent in production process is not desirable. Besides, this method takes a long time for drying by vaporizing the solvent after dipping and greatly lowers the productivity.

EP-A-1 033 435 describes a composite cord, comprising a high polymer core and 18 steel filaments arranged around this core. The polymer core comprises polyethylene filaments.

A first object of the present invention is to provide a steel cord for a tire with an m+n twist structure enabling improvements to increase a corrosion resistance and durability of a completed tire product and improve the energy efficiency during curing of the tire and a radial tire using the same.

A steel cord for a tire of the present invention to attain said object comprises a steel cord having the m+n twist structure comprising a core containing m pieces of wires and a sheath containing n pieces of wires, wherein a thermoplastic elastomer compound is filled into a space between said core and said sheath, and wherein the elastomer is scattered as a non-continuous phase in a matrix of a thermoplastic resin.

As described above, since structurally no hollow part is present in the steel cord itself by filling the space between core and sheath with a thermoplastic elastomer compound in the phase of cord before rolling to a tire component member, it is possible to increase the corrosion resistance of the completed tire product.

Further, since an unvulcanized rubber compound or a thermoplastic elastomer compound is used as a filler, a interface strength with a matrix rubber covering the steel cord is high and no separation occurs even under repeated strains, and as a result, it is possible to prevent formation of cracks near the cord and make defects on product tire hard to occur.

Further, since structurally no hollow part is present in the steel cord itself, it is possible to improve the energy efficiency of curing by reducing a pressure when curing a tire using this.

In the above-mentioned steel cord with the m+n twist structure, it is preferable that, when the cross-section area per wire is d, the cross-section area of a circumscribed circle to the core is $D_1$ and the cross-section area of a circumscribed circle to the sheath is $D_2$, the coverd cross-section area X by an unvulcanized rubber compound or a thermoplastic elastomer compound is within the range of $D_1 - (d \times m) < X < D_2 - [d \times (m + n)]$. When this cross-section area of coverage X satisfies said relationship, it is possible to thoroughly fill hollow parts of the steel cord with the unvulcanized rubber compound or the thermoplastic elastomer compound.

According to the present invention, a radial tire using at least one of a carcass member, finishing member and belt member, formed with rubber-covered steel cords having said m+n twist structure, is provided.

Fig.1 is a partial cross-section showing a radial tire for a heavy load as an embodiment of the present invention.
Fig.2 is a cross-section showing a steel cord with an m+n twist structure using the embodiment of the present invention.
Fig.3 is a partial cross-section showing a radial tire as another embodiment of the present invention.

Compositions of the present invention will be described below by referencing the attached drawings.

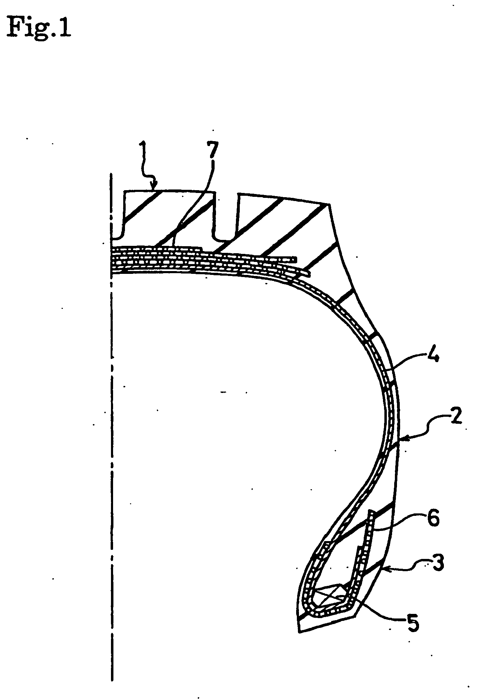

Fig.1 shows a radial tire for a heavy load as an embodiment according to the present invention. In Fug.1, 1 is a tread part, 2 is a sidewall part and 3 is a bead part. A carcass layer 4 (carcass member) is arranged, between a pair of beads 3, 3, and its end part in the tire width direction is wound up outward from the inside of the tire around a bead core 5. Moreover, in the bead part 3, a bead reinforcing layer 6 (finishing member), extending outward from the inside of the tire along the carcass layer 4 so as to wrap the bead core 5, is embedded. On the outer periphery side of the carcass layer 4 in tread part 1, a plurality of belt layers 7 (belt member) are embedded.

In the above-mentioned radial tire for a heavy load, a material, arranged with a plurality of steel cords each having an m+n twist structure comprising a core containing m pieces of wires and a sheath containing n pieces of wires and covered with matrix rubber, is used for the carcass member, finishing member and the belt member.

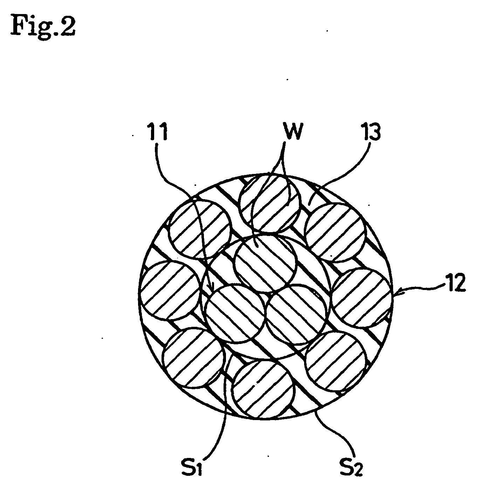

Fig.2 shows the above-mentioned steel cord with the m+n twist structure. As shown in Fig.2, the steel cord has an m+n twist structure comprising a core 11 containing m pieces of wires W and a sheath 12 containing n pieces of wires W. Further, a packing 13 formed with an unvulcanized rubber compound or a thermoplastic elastomer compound is filled into a space between the core 11 and the sheath 12.

By filling hollow parts of twist structure of the steel cord with an unvulcanized rubber compound or a thermoplastic elastomer compound in this way, the following work effects can be obtained:

First, since structurally no hollow part is present in the steel cord itself, it is possible to increase a corrosion resistance of a completed tire product.

Secondly, since the unvulcanized rubber compound or the thermoplastic elastomer compound is used as packing, a interface strength with a matrix rubber covering the steel cord is high and no separation occurs even under repeated strains, and as a result, it is possible to prevent formation of cracks near the cord and make defects on product tire hard to occur.

Thirdly, since structurally no hollow part is present in the steel cord itself, it is possible to improve the energy efficiency of curing by reducing a pressure when curing a tire using this.

Here, when the cross-section area per a wire W is d ($mm^2$), the cross-section area of a circumscribed circle $S_1$ to the core 11 is $D_1$, ($mm^2$) and the cross-section area of a circumscribed circle $S_2$ to the sheath 12 is $D_2$ ($mm^2$), the coverd cross-section area X ($mm^2$) by the unvulcanized rubber compound or the thermoplastic elastomer compound should be set to satisfy the equation (1) below:

$$D_1 - (d \times m) < X < D_2 - [d \times (m + n)] \qquad (1)$$

That is, when the packing filling the space between the core and the sheath has an adhesion same as the adhesion of the matrix rubber covering the steel cord, the adhesion between the cord and the matrix rubber is not spoiled even if the packing overflows from the sheath. However, when a rubber compound or a thermoplastic elastomer compound having a lower adhesion is used as packing for reasons of workability of the core coverage and so on, there is a limit on the amount of overflow from the sheath. Moreover, even if the packing has no problem about the adhesion, as an excessive overflow outward from the sheath would cause adhesion of cords in the winding process after the cord preparation and greatly impede the covering operation of the matrix rubber, there is an upper limit on the amount of packing from this point as well. On the other hand, since a sufficient effect cannot be obtained when the amount of packing is not enough and the space between the core and sheath cannot be filled, there is a lower limit on the amount of packing.

Thus, since the coverd cross-sectionarea X by the unvulcanized rubber compound or the thermoplastic elastomer compound satisfies the above mentioned (1), the unvulcanized rubber compound or the thermoplastic elastomer compound is filled properly into the hollow part of the steel cord.

Incidentally, although the preparation method of the above-mentioned steel cord is not specially specified, for example, first the core part may be covered with a proper amount of an unvulcanized rubber compound or a thermoplastic elastomer compound and then wires of the sheath part may be twisted around the core.

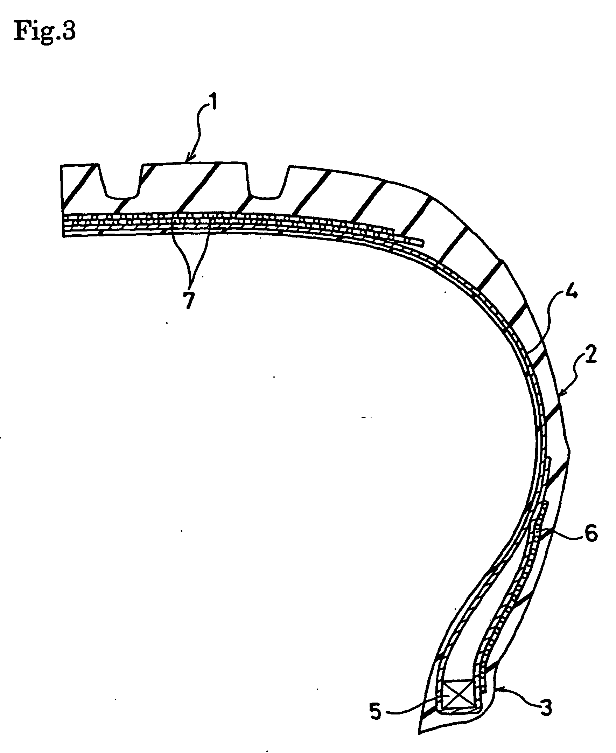

Fig.3 shows a radial tire as another embodiment of the present invention. In Fig.3, 1 is a tread part, 2 is a sidewall part and 3 is a bead part. A carcass layer 4 is arranged between a pair of beads 3, 3, and its end part in the tire width direction is wound up outward from the inside of the tire around a bead core 5. Further, in a zone between the sidewall part 2 and the bead part 3, a side reinforcing layer 6 (side reinforcing member), extending along the carcass layer 4, is embedded. On the outer periphery side of the carcass layer 4 in tread part 1, a plurality of belt layers 7 (belt member) is embedded.

In the above-mentioned radial tire, a material, arranged with a plurality of steel cords each having a 1xN twist structure containing N pieces of wires and covered with a matrix rubber, is used for the belt member and the side reinforcing member.

Here, when the cross-section area per wire is d (mm$^2$), the cross-section area of an inscribed circle S$_3$ is D$_3$ (mm$^2$) and the cross-section area of a circumscribed circle S$_4$ to N pieces of wires is D$_4$ (mm$^2$), the coverd cross-section area X (mm$^2$) by an unvulcanized rubber compound or a thermoplastic elastomer compound should be set to satisfy the equation (2) below:

$$D_3 < X < D_4 - [d \times N] \qquad (2)$$

That is, when the packing filling the space at the cord center has an adhesion same as the adhesion of the matrix rubber covering the steel cord, the adhesion between the cord and the matrix rubber is not spoiled even if the packing overflows from the cord. However, when a rubber compound or a thermoplastic elastomer compound having a lower adhesion is used as packing for reasons of workability of the core coverage and so on, there is a limit on the amount of overflow from the cord. Further, even if the packing as no problem about the adhesion, as an excessive overflow from the cord would cause adhesion of cords in the winding process after the cord preparation and greatly impede the covering operation of the matrix rubber, there is an upper limit on the amount of packing from this point as well. On the other hand, since a sufficient effect cannot be obtained when the amount of packing is not enough and the space at the cord center cannot be filled, there is a lower limit on the amount of packing.

Thus, when the coverd cross-section area X by the unvulcanized rubber compound or the thermoplastic elastomer compound satisfies the above mentioned (2), the unvulcanized rubber compound or the thermoplastic elastomer compound is filled properly into the hollow part of the steel cord.

As the unvulcanized rubber compound in the present invention, one like the matrix rubber of the tire component member can be used. In particular, to secure a good adhesion to the steel cord, preferably a adhesion promoter, typically an organic acid cobalt, be contained in the rubber compound. On the other hand, as the thermoplastic elastomer compound, preferably one having a structure in which an elastomer is scattered as a noncontinuous phase in a matrix of a thermoplastic resin be used, and the thermoplastic resin itself may also be used.

As the thermoplastic resin, for example, polyamide resin [such as nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 copolymer (N6/66/610), nylon MXD6, nylon 6T, nylon 6/6T copolymer, nylon 66/PP copolymer, nylon 66/PPS copolymer], polyester resin [such as polybutylene terephthalate (PBT), polyethylene terephthalate (PET), polyethylene isophthalate (PEI), polybutylene terephthalate/tetramethyleneglycol copolymer, PET/PEI copolymer, polyallylate (PAR), polybutylene naphthalate (PBN)], polynitrile resin [such as polyacrylonitrile (PAN), polymethacrylonitrile, acrylonitrile/styrene copolymer (AS), methacrylonitrile/styrene copolymer, methacrylonitrile/styrene/butadiene copolymer], poly(metha)acrylate resins [such as polymethacrylic acid methyl (PMMA), polymethacrylic acid ethyl, ethylene ethylacrylate copolymer (EEA), ethylene acrylic acid copolymer (EAA), ethylene methylacrylate resin (EMA)], polyvinyl resin [such as vinyl acetate (EVA), polyvinyl alcohol (PVA), vinyl alcohol/ethylene copolymer (EVOH), polyvinylidene chloride (PVDC), polyvinyl chloride (PVC), vinyl chloride/vinylidene chloride copolymer, vinylidene chloride/methylacrylate copolymer], cellulosic resin [such as cellulose acetate, cellulose acetate butylate], fluororesin [such as polyvinylidene fluoride (PVDF), polyvinyl fluoride (PVF), polychlorofluoroetylene (PCTFE), tetrafluoroethylene/ethylene copolymer (ETFE)] and an imide resin [such as aromatic polyimide (PI)] can be mentioned.

As the elastomer scattered in the matrix of thermoplastic resin, for example, diene rubber and its hydrogenate [such as NR, IR, epoxy natural rubber, SBR, BR (high-cis and low-cis BR), NBR, hydro-NBR, hydro-SBR], an olefin rubber [such as, ethylenpropylene rubber (EPDM, EPM), modified maleic ethylenpropylene rubber (M-EPM)], isobutylene-isoprene rubber (IIR), isobutylene and aromatic vinyl or diene monomer copolymer, acrylic rubber (ACM), ionomer, halogen rubber [such as, Br-IIR, Cl-IIR, brominate of isobutylene-paramethylstyrene copolymer (Br-IPMS), chloroprene rubber (CR), hydrin rubber (CHC, CHR), chlorosulfonated polyethylene (CSM), chlorinated polyethylene (CM), modified maleic chlorinated polyethylene (M-CM), silicone rubber [such as, methylvinyl silicone rubber, dimethyl silicone rubber, methylphenylvinly silicone rubber], sulfur rubber [such as, polysulfide rubber], fluororubber [such as, vinylidene fluoride rubber, fluorovinylether rubber, tetrafluoroetylenepropyrene rubber, fluorosilicone rubber, fluorophosphazene rubber], thermoplastic elastomer [such as, styrene elastomer, olefin elastomer, polyester elastomer, urethane elastomer, polyamide elastomer] can be mentioned.

Example

About steel cords (3+9x0.22+w) of embodiments 1 to 11 of the present invention and prior art 1, changes in fatigue rupture life by moisture absorption, changes in cord-rubber adhesion, the curing pressure reducing effect and the cord unwinding workability were evaluated by the following methods, and results are shown in Table 1.

However, in the above-mentioned steel cords, $D_1 - (d \times m) = 0.062mm^2$ and $D_2 - [d \times (m + n)] = 0.236mm^2$. As for the cord packing, for embodiments 1 to 7, an unvulcanized rubber compound (A) using mainly a natural rubber was used, and for embodiments 8 to 11, a thermoplastic elastomer compound (B) with a vulcanized powder of isobutylene-isoprene rubber scattered in a matrix formed with a nylon resin was used.

Changes in fatigue rupture life by moisture absorption:

Testpieces were each prepared by embedding three cords in a 10 mm wide, 5 mm thick and 1000 mm long rubber block along the length direction, and these testpieces, with cord ends left exposed, were aged by leaving under the conditions of 70°C and 98%RH in an oven for seven days. Before and after aging, testpieces were set to a three-roller fatigue tester, and the rupture life was measured under the conditions of 25 mm in roller diameter and 20 kg in tension. Moreover, from the rupture life before aging To and that after aging T, the life reduction index $[(logT/logTo) \times 100]$ was determined. The life reduction index means that the life reduction by moisture absorption is little when the life reduction index is large.

Changes in cord-rubber adhesion by moisture absorption:

After aging by leaving the above-mentioned testpieces under the conditions of 70°C and 98%RH in an oven for seven days, a drawing test was held according to the ASTM method and the rubber adhesion rate (%) was measured. The rubber adhesion rate means that the reduction of adhesion by moisture absorption is little when the rubber adhesion rate is large.

Curing pressure reducing effect:

By molding green tires using steel cords as the carcass cords, these green tires were cured under a pressure of 15 kg/cm$_2$, and the condition of void generation was observed at the carcass turn up part of each cured tire. The result of evaluation was shown as: "0" when there is no void at all, "small" when relatively small voids are present, and "Large" when relatively large voids are present.

Cord unwinding workability:

The workability of the steel cord densely wound to a creel was evaluated. The result of evaluation was shown as: "O" when the workability is good, "Δ" when the workability is lowered a little, and "X" when the workability is greatly lowered due to adhesion of cords.

#### Table 1

| | Prior Art | Embodiments | | | | | | | | | | |
|---|---|---|---|---|---|---|---|---|---|---|---|---|
| | 1 | 1 | 2 | 3 | 4 | 5 | 6 | 7 | 8 | 9 | 10 | 11 |
| Cross-section area of coverage (mm$^2$) | 0 | 0.070 | 0.100 | 0.150 | 0.220 | 0.300 | 0.050 | 0.020 | 0.100 | 0.150 | 0.250 | 0.050 |
| Cord packing | — | A | A | A | A | A | A | A | B | B | B | B |
| Life reduction index | 30 | 60 | 75 | 75 | 75 | 75 | 50 | 45 | 60 | 70 | 50 | 50 |
| Rubber adhesion rate (%) | 50 | 90 | 100 | 100 | 100 | 100 | 80 | 70 | 90 | 90 | 40 | 70 |
| Void generation | Large | 0 | 0 | 0 | 0 | 0 | Small | Small | 0 | 0 | 0 | Small |
| Cord unwinding workability | ○ | ○ | ○ | ○ | △ | × | ○ | ○ | ○ | ○ | △ | ○ |

EP 1 186 699 B1

As indicated by Table 1, each of embodiments 1 to 11 of the present invention showed that the reduction of life and adhesion due to moisture absorption was small as well as void generation was little, compared to prior art 1. In particular, for embodiments 1 to 4, 8 and 9 of which the coverd cross-section area X was within the range of 0.062 mm$^2$ to 0.236 mm$^2$, noticeable work effects were obtained.

According to the present invention, since an unvulcanized rubber compound or a thermoplastic elastomer compound is filled into a space between the core and the sheath in the steel cord having the m+n twist structure comprising the core containing m pieces of wires and the sheath containing n pieces of wires, it is possible to increase a corrosion resistance and durability of a completed tire product and improve the energy efficiency during curing of the tire.

## Claims

1. A steel cord for a tire having the m+n twist structure comprising a core (11) containing m pieces of wires (w) and a sheath (12) containing n pieces of wires (w), wherein a thermoplastic elastomer compound is filled into a space between said core (11) and said sheath (12), **characterized in that** said elastomer is scattered as a non-continuous phase in a matrix of a thermoplastic resin.

2. A steel cord for a tire as claimed in claim 1 wherein, when the cross-section area per wire of said wire is d, the cross-section area of a circumscribed circle to said core is $D_1$ and the cross-section area of a circumscribed circle to said sheath is $D_2$, the covered cross-section area X by said thermoplastic elastomer compound is within the range of $D_1 - (d \times m) < X < D_2 - [d \times (m + n)]$.

3. A radial tire using at least one of a carcass member (4), finishing member and belt member (7), each comprising steel cords as claimed in claim 1 or 2 covered with rubber.

## Patentansprüche

1. Stahlcord für einen Reifen mit der m+n-Twist-Struktur, umfassend einen Kern (11), umfassend m Stücke von Drähten (w) und eine Hülle (12), umfassend n Stücke von Drähten (w), worin eine thermoplastische Elastomerverbindung in einen Raum zwischen dem Kern (11) und der Hülle (12) gefüllt ist, **dadurch gekennzeichnet, dass** das Elastomer als nicht kontinuierliche Phase in einer Matrix aus einem thermoplastischen Harz verstreut ist.

2. Stahlcord für einen Reifen nach Anspruch 1, worin die Querschnittsfläche pro Draht des Drahtes d ist, die Querschnittsfläche eines umgebenden Kreises zu dem Kern $D_1$ ist und die Querschnittsfläche eines umgebenden Kreises zu der Hülle $D_2$ ist, wobei die bedeckte Querschnittsfläche x durch die thermoplastische Elastomerverbindung innerhalb des Bereiches $D_1 - (d \times m) < X < D_2 - [d \times (m + n)]$ liegt.

3. Radialreifen unter Verwendung von zumindest einem Karkassenteil (4), Finishingteil und Gurtteil (7), die jeweils den Stahlcord gemäß Anspruch 1 oder 2 enthalten, der mit Gummi bedeckt ist.

## Revendications

1. Câble d'acier pour un pneu ayant une structure torsadée m+n comprenant un noyau (11) contenant m pièces de fils métalliques (w) et une gaine (12) contenant n pièces de fils métalliques (w), dans lequel un composé élastomère thermoplastique est chargé dans l'espace entre ledit noyau (11) et ladite gaine (12), **caractérisé en ce que** ledit élastomère est dispersé sous forme de phase discontinue dans une matrice de résine thermoplastique.

2. Câble d'acier pour un pneu selon la revendication 1 dans lequel, lorsque l'aire de section transversale par fil métallique dudit fil métallique est d, l'aire de section transversale d'un cercle circonscrit audit noyau est $D_1$ et l'aire de section transversale d'un cercle circonscrit à ladite gaine est $D_2$, l'aire de section transversale X recouverte par ledit composé élastomère thermoplastique est dans la plage de $D_1 - (d \times m) < X < D_2 - [d \times (m + n)]$.

3. Pneu radial utilisant au moins un élément de carcasse (4), un élément de finition et un élément de ceinture (7), comprenant chacun des câbles d'acier selon la revendication 1 ou 2 recouverts avec du caoutchouc.

Fig.1

Fig.2

Fig.3